# EUROPEAN PATENT SPECIFICATION

(11) **EP 4 460 024 B1**
(45) Date of publication and mention of the grant of the patent: **05.08.2026**
(21) Application number: 23834522.7
(22) Date of filing: 19.05.2023
(51) Int. Cl.: H04N 23/60

(54) **METHOD FOR DISPLAYING THUMBNAIL DURING PHOTOGRAPHING AND ELECTRONIC DEVICE**
VERFAHREN ZUR ANZEIGE VON MINIATURBILDERN WÄHREND DES FOTOGRAFIERENS UND ELEKTRONISCHE VORRICHTUNG
PROCÉDÉ D'AFFICHAGE DE VIGNETTE PENDANT LA PHOTOGRAPHIE ET DISPOSITIF ÉLECTRONIQUE

(30) Priority: 05.07.2022 CN 202210784093
(43) Date of publication of application: 06.11.2024
(73) Proprietor: Honor Device Co., Ltd., Shenzhen, Guangdong 518040 (CN)
(72) Inventor: XU, Jirun, Shenzhen, Guangdong 518040 (CN)
(74) Representative: Isarpatent
(86) International application number: PCT/CN2023/095202
(87) International publication number: WO 2024/007748

(56) References cited:
- WO-A2-2019/157387
- CN-A- 103 677 609
- CN-A- 106 879 263
- CN-A- 107 222 679
- CN-A- 108 124 099
- CN-A- 111 491 097
- CN-A- 116 112 787
- US-A1- 2013 222 671
- US-A1- 2016 357 415
- US-A1- 2018 158 199

## Description

### TECHNICAL FIELD

Embodiments of this application relate to the field of shooting technologies, and in particular to a method for displaying a thumbnail during shooting, an electronic device, and a computer-readable storage medium.

### BACKGROUND

With improvement of hardware configurations of terminals, more users choose to use the terminals to record wonderful moments in life. The terminal has a photo instant display function. To be specific, a photo taken by the terminal is instantly displayed in a form of a thumbnail in a specific region of a screen of the terminal, to help the user determine that a shooting operation is completed. The user may preview the taken photo by tapping the thumbnail.

At present, long duration is taken from a time at which the user triggers the terminal to perform shooting to a time at which the terminal displays the thumbnail.

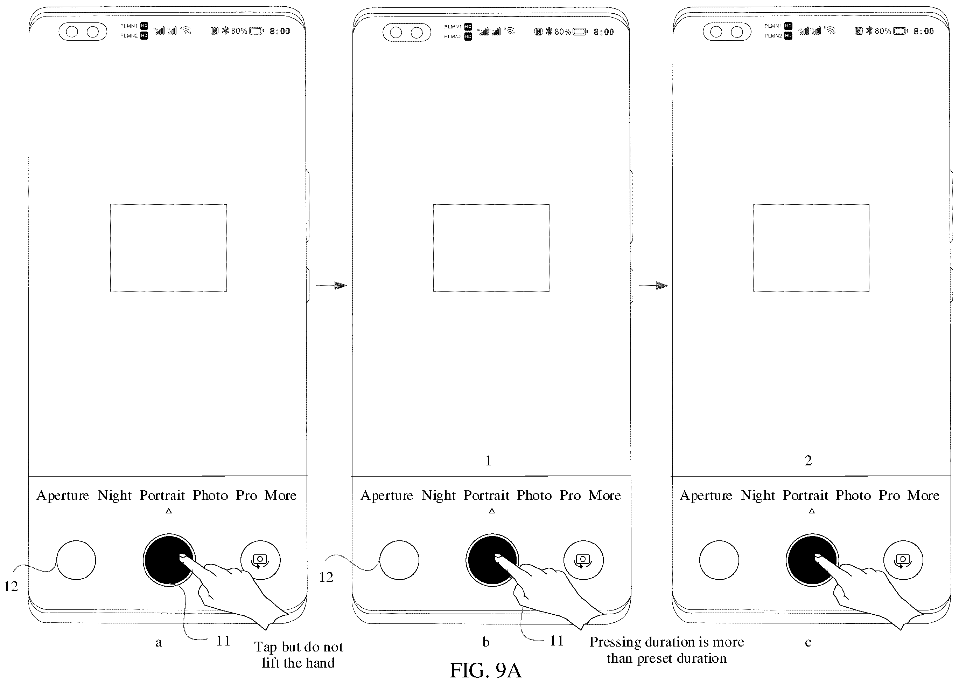

WO 2019/157387 A2 relates generally to graphical user interfaces for media capture applications. With regard to Figures 9A to 9C, interfaces are disclosed showing a last captured item area that displays a preview of a last captured media item, for example a thumbnail. The media item is captured by tapping a location on a touch screen display corresponding to a media capture affordance. After liftoff of the touch input, the last captured media item area shows the last captured media item. Further, if the device continues to detect the touch input after a threshold time has passed and movement criteria has not been met, the device begins to capture a video.
US 2018/158199 is directed towards systems and methods for generating a new aligned image from a plurality of burst image.
US 2013/222671 discloses an image capture method comprising capturing a sequence of image frames; providing the sequence of image frames for preview along a first path and buffering the sequence of image frames into a buffer along a second path separately and concurrently; receiving an input command via an input interface unit; and in response to the input command, extracting a portion of the sequence of image frames from the buffer and encoding the portion of image frames along the second path; and storing the portion of encoded image frames in a memory unit.

### SUMMARY

Embodiments of this application provide a method for displaying a thumbnail during shooting, an electronic device, and a computer-readable storage medium, as defined in the appended set of claims, to reduce duration taken from a time at which a user taps a shooting control to a time at which a thumbnail is displayed, enabling the user to quickly view the thumbnail during shooting, and improving a shooting speed of the terminal.

An embodiment of this application provides a method for displaying a thumbnail during shooting. An execution entity that performs the method may be a terminal or a chip in a terminal. The following uses a terminal as an example for description. In the method, a terminal generates a first thumbnail in a shooting interface of the terminal when a user presses a shooting control in the shooting interface but does not lift a hand, and the terminal displays the first thumbnail in a thumbnail display region of the shooting interface when the user lifts the hand.

In conventional technologies, a terminal may perform an operation of generating and displaying a thumbnail after a user presses a shooting control in a shooting interface and lifts a hand. Therefore, long duration is taken, and a shooting speed of the terminal perceived by the user is slow. In this application, the operation of generating the first thumbnail is shifted before the operations that "the user presses the shooting control and the user lifts the hand". Therefore, only the operation of displaying the first thumbnail needs to be performed when the user lifts the hand, without performing, with long duration, an operation of generating the first thumbnail. This reduces duration taken from a time at which the user taps the shooting control to a time at which the first thumbnail is displayed, to enable the user to quickly view the first thumbnail, and improve the shooting speed of the terminal.

The following describes a process in which the terminal generates the thumbnail and displays the thumbnail.

The terminal includes: a camera application, a thumbnail processing module, and an image processing module. When the user presses the shooting control but does not lift the hand, the camera application controls the thumbnail processing module to generate the first thumbnail. For example, the camera application sends a thumbnail generating indication to the thumbnail processing module, to trigger the thumbnail processing module to generate the first thumbnail. After generating the first thumbnail, the thumbnail processing module sends the first thumbnail to the image processing module. The image processing module feeds back the first thumbnail to the camera application when the user lifts the hand; and the camera application controls the terminal to display the first thumbnail in the thumbnail display region.

The terminal further includes: a request processing module, a decision-making engine, and a frame selection module. When the user presses the shooting control but does not lift the hand, sending, by the camera application, a first event to the request processing module, where the first event indicates to generate the thumbnail. The request processing module sends a thumbnail generation request to the decision-making engine in response to the first event, the decision-making engine sends the frame sequence information to the frame selection module in response to the thumbnail generation request. In an embodiment, frame sequence information indicates a type of a photo in a photo frame sequence, and a frame quantity (that is, a quantity of photos in the photo frame sequence).

The frame selection module obtains the photo frame sequence based on the frame sequence information, where the photo frame sequence includes at least two photos. It should be understood that photos in the photo frame sequence are RAW images. In an embodiment, the frame selection module may obtain a photo frame sequence from a camera lens (a sensor) of the terminal.

The frame selection module selects a target frame from the photo frame sequence, and sends the target frame to the thumbnail processing module. The thumbnail processing module generates the first thumbnail based on the target frame. In an embodiment, the thumbnail processing module may convert the target frame (a RAW image) to a YUV format, and then convert the target frame in the YUV format to an RGB format, to obtain the first thumbnail.

The terminal further includes: an event processing interface. The camera application sends a first event to the request processing module via the event processing interface.

The frame selection module takes a photo with highest clarity in the photo frame sequence as the target frame, that is, the target frame is the photo with the highest resolution in the photo frame sequence. In a possible implementation, the frame selection module selects the target frame from the photo frame sequence based on a shooting parameter of each photo in the photo frame sequence. The shooting parameter may include but is not limited to: a focus value (a focus value) and photosensitivity ISO.

The above describes the process of generating the first thumbnail of the terminal, and the following describes a process of displaying the first thumbnail of the terminal.

The terminal further includes: a shooting decision-making module. When the user lifts the hand, the camera application sends a second event to the shooting decision-making module, where the second event indicates to display the thumbnail. The shooting decision-making module sends a thumbnail feedback indication to the image processing module in response to the second event. The image processing module feeds back the first thumbnail to the camera application in response to the thumbnail feedback indication. In this way, the camera application controls the terminal to display the first thumbnail in the thumbnail display region. In a possible implementation, the camera application sends the second event to the shooting decision-making module via the event processing interface.

An operation performed by the user in the shooting interface is a continuous shooting operation or a sliding operation. The continuous shooting operation or the sliding operation includes an operation that the user presses the shooting control. Therefore, the terminal can perform the operation of generating the first thumbnail. However, the continuous shooting operation or the sliding operation is not an operation that the user taps the shooting control to take a photo. Therefore, to avoid misoperation by the user, a response may be performed accurately. If an operation performed by the user in the shooting interface is the continuous shooting operation or the sliding operation, the camera application sends a canceling instruction to the request processing module, where the canceling instruction indicates to cancel generation of the thumbnail.

The request processing module sends a thumbnail canceling request to the decision-making engine. When the decision-making engine sends the frame sequence information to the frame selection module, the decision-making engine sends a frame selection stopping request to the frame selection module. When the frame selection module sends the target frame to the thumbnail processing module, the frame selection module sends a processing stopping request to the thumbnail processing module. When the thumbnail processing module sends the first thumbnail to the image processing module, the thumbnail processing module sends a stopping request to the image processing module. When the image processing module receives the thumbnail feedback indication from the shooting decision-making module, the image processing module does not feed back the first thumbnail to the camera application.

In this embodiment of this application, when the operation performed by the user in the shooting interface is the continuous shooting operation or the sliding operation, the terminal may cancel the operation of generating the thumbnail or the operation of generating the thumbnail. However, the image processing module does not feed back the first thumbnail to the camera application, that is, does not perform the operation of displaying the thumbnail, to implement a precise response.

The terminal generates the first thumbnail based on the target frame, so that a speed of the terminal in displaying the thumbnail is improved, to enable the user to perceive that the shooting speed of the terminal is fast. In a possible implementation, the terminal may further improve quality of the thumbnail.

In this implementation, the terminal further includes: a gallery application. After the image processing module feeds back the first thumbnail to the camera application, the camera application sends the first thumbnail to the gallery application; and the gallery application stores the first thumbnail.

After receiving the first thumbnail from the thumbnail processing module, the image processing module obtains the photo frame sequence from the frame selection module, and generates a second thumbnail based on the photo frame sequence. For example, the image processing module may fuse a region having the best quality in each photo in the photo frame sequence, to obtain a fused RAW image with high clarity, and generate the second thumbnail based on the fused RAW image. In an embodiment, quality (clarity) of the second thumbnail is higher than quality (clarity) of the first thumbnail. In this embodiment, the terminal may obtain a thumbnail with higher clarity.

In this way, the image processing module sends the second thumbnail to the gallery application, and the gallery application replaces the first thumbnail with the second thumbnail. In this implementation, when the terminal displays the shooting interface, the camera application obtains the second thumbnail from the gallery application, and the camera application controls the terminal to display the second thumbnail in the thumbnail display region.

In this implementation, the terminal may display a second thumbnail with higher clarity in the thumbnail display region, to enable the user to view more clearly. This improves user experience.

In an embodiment, modules described in the first aspect may be integrated with each other, to perform steps of the integrated modules.

According to a second aspect, an embodiment of this application provides an electronic device. The electronic device may include: a processor, a memory, a camera lens and a touch panel, The memory is configured to store computer-executable program code. The program code includes instructions. When the processor executes the instructions, the instructions enable the electronic device to perform the method according to the first aspect.

According to a third aspect, as described but not claimed, an embodiment of this application provides a computer program product including instructions. When the computer program product is run on a computer, the computer is enabled to perform the method according to the first aspect.

According to a fourth aspect, an embodiment of this application provides a computer-readable storage medium. The computer-readable storage medium stores instructions. When the instructions are run on on a computer of the device of the second aspect, the computer is enabled to perform the method according to the first aspect.

For beneficial effects of the possible implementations of the second aspect to the fourth aspect, reference may be made to the beneficial effects brought by the first aspect. This is not described herein again.

### BRIEF DESCRIPTION OF DRAWINGS

FIG. 1 is a schematic diagram of a terminal displaying a thumbnail;
FIG. 2 is a block diagram of a structure of a terminal according to an embodiment of this application;
FIG. 3 is a schematic flowchart of a terminal shooting a photo and displaying a thumbnail according to an embodiment of this application;
FIG. 4 is a schematic diagram of a scenario in which a terminal displays a thumbnail according to an embodiment of this application;
FIG. 5 is a block diagram of another structure of a terminal according to an embodiment of this application;
FIG. 6A and FIG. 6B are schematic flowcharts of a method for displaying a thumbnail during shooting according to an embodiment of this application;
FIG. 7 is a schematic diagram of another scenario in which a terminal displays a thumbnail according to an embodiment of this application;
FIG. 8A and FIG. 8B are schematic flowcharts of a method for displaying a thumbnail during shooting according to another embodiment of this application;
FIG. 9A is a schematic diagram of an operation performed on a shooting control by a user;
FIG. 9B is a schematic diagram of another operation performed on a shooting control by a user;
FIG. 10A and FIG. 10B are schematic flowcharts of a method for displaying a thumbnail during shooting according to another embodiment of this application; and
FIG. 11 is a schematic diagram of a structure of an electronic device according to an embodiment of this application.

### DESCRIPTION OF EMBODIMENTS

The embodiments corresponding to the appended claims define the invention. The other embodiment not covered by the appended claims are only illustrative examples.

A terminal (terminal) in embodiments of this application may be referred to as user equipment. For example, the terminal may be a mobile phone, a portable android device (portable android device, PAD), a personal digital assistant (personal digital assistant, PDA), a handheld device having a wireless communication function, a computing device, an on-board device or a wearable device, a virtual reality (virtual reality, VR) terminal device, an augmented reality (augmented reality, AR) terminal device, a wireless terminal in industrial control (industrial control), a terminal in smart home (smart home), and the like. A form of the terminal is not specifically limited in embodiments of this application. In embodiments of this application, an example in which the terminal is a mobile phone is used for description.

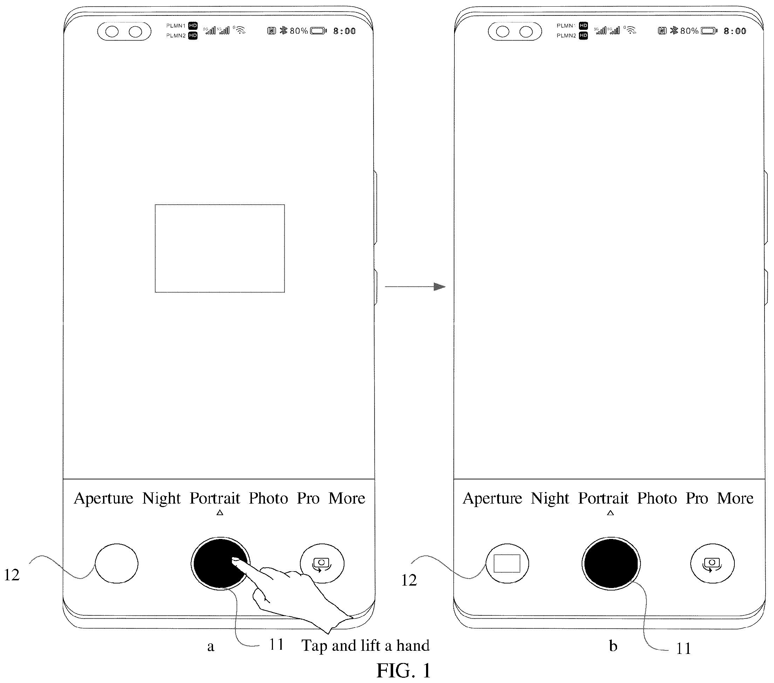

FIG. 1 is a schematic diagram of a terminal displaying a thumbnail. A in FIG. 1 shows a shooting interface of a camera application in a mobile phone. The shooting interface shows a shooting control 11 and a thumbnail display region 12. It should be understood that, in this embodiment of this application, not all controls on the shooting interface are shown, and only controls in embodiments of this application are shown. A user aligns a camera to an object (for example, a rectangle) and taps the shooting control 11, to trigger the mobile phone to take a photo and obtain a rectangular photo. Refer to B in FIG. 1. After the mobile phone takes a photo, a thumbnail of the rectangular photo may be displayed in the thumbnail display region 12.

An imaging speed of the mobile phone is one of important indicators for evaluating shooting of the mobile phone, and one of the indicators is performance of shot2see. Long duration taken from a time at which the user taps the shooting control 11 to a time at which the thumbnail is displayed in the thumbnail display region 12 may represent the performance of shot2see of the mobile phone. If the duration is shorter, the performance of shot2see is better. If the long duration is taken, the performance of shot2see is poorer. The duration taken from the time at which the user taps the shooting control 11 to the time at which the thumbnail is displayed in the thumbnail display region 12 is a shooting speed that may be intuitively felt by the user.

At present, long duration is taken from the time at which the user taps the shooting control 11 to the time at which the thumbnail is displayed in the thumbnail display region 12. Therefore, the user feels that the shooting speed is slow and user experience is poor.

To find out a reason that the performance of shot2see of the terminal is poor (that is, long duration is taken from the time at which the user taps the shooting control 11 to the time at which the thumbnail is displayed in the thumbnail display region 12), the following analyzes a process in which the terminal takes a photo and displays a thumbnail on the terminal, to find out a reason that the shooting speed is slow.

Before a process in which the terminal performs shooting and displays the thumbnail on the terminal is described, a software architecture of the terminal is first described.

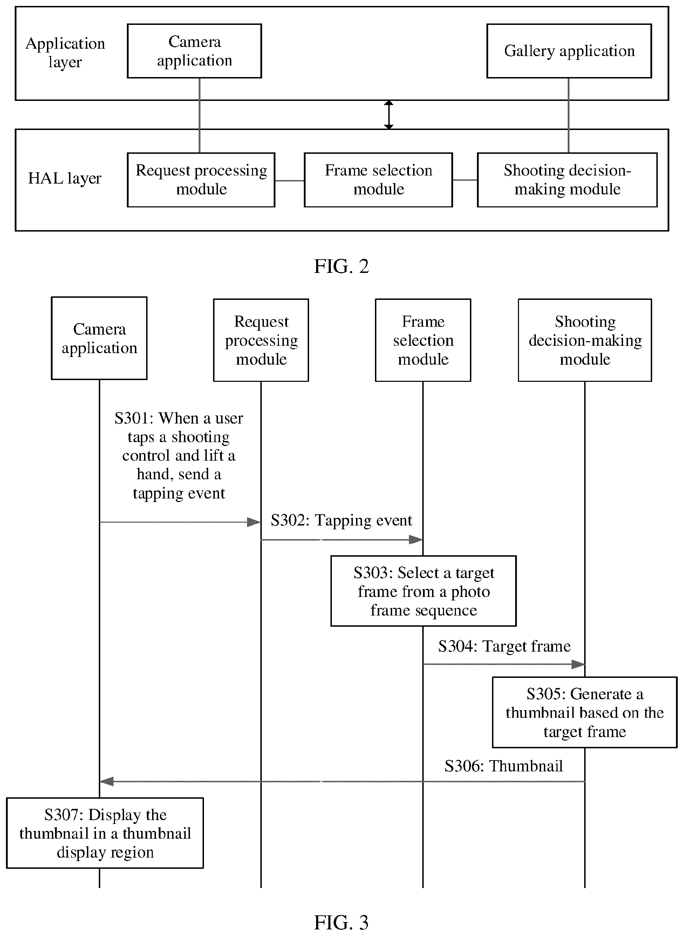

FIG. 2 is a block diagram of a structure of a terminal according to an embodiment of this application. A software system of the terminal may use a layered architecture, an event-driven architecture, a microkernel architecture, a micro service architecture, or a cloud architecture. In the embodiments of this application, an Android system of the layered architecture is used as an example to illustrate a software structure of the terminal. In the layered architecture, the software system of the terminal is divided into several layers, each layer has a clear role and task, and the layers communicate with each other via a software interface.

In an embodiment, an Android system is divided into five layers: an application (application) layer, an application framework (application framework) layer, an Android runtime (Android runtime), a system library, a hardware abstract layer (hardware abstract layer, HAL), and a kernel (kernel) layer. FIG. 2 shows the application layer and the hardware abstraction layer in embodiments of this application. The following describes the application layer and the hardware abstraction layer. For functions of other layers, refer to related description in an existing Android system.

The application layer may include an application package. For example, the application layer may include application packages such as Camera, Gallery, Calendar, Phone, Map, Navigation, Bluetooth, Music, Videos, and Messages. As shown in FIG. 2, a camera application and a gallery application in embodiments of this application are shown in the application layer.

The hardware abstract layer may include a plurality of library modules, such as a camera lens library module, and a motor library module. The Android system can load corresponding library modules for device hardware, and then realize the purpose of accessing the device hardware by the application framework layer. The device hardware may include, for example, a motor, and a camera lens.

In an embodiment, the hardware abstraction layer may further include: a request processing module, a frame selection module, and a shooting decision-making module. The request processing module is configured to process an event from the camera application. The frame selection module is configured to select a frame from a plurality of frames of photos captured by a camera (a camera lens), to generate a thumbnail. The shooting decision-making module is configured to generate a thumbnail based on a frame of photo selected by the frame selection module, to enable the terminal to display the thumbnail.

Based on the structure of the terminal shown in FIG. 2, the following describes a process in which the terminal takes a photo and displays a thumbnail with reference to FIG. 3.

S301: When a user taps a shooting control and lifts a hand, the camera application sends a tap event to the request processing module.

The tap event indicates that the user taps the shooting control and lifts the hand. In an embodiment, the tap event triggers the terminal to take a photo and display a thumbnail in a thumbnail display region.

S302: The request processing module synchronizes the tap event to the frame selection module.

S303: The frame selection module selects a target frame from a photo frame sequence.

The terminal takes the photo based on a shooting parameter, to obtain the photo frame sequence. The photo frame sequence may include a plurality of photos, all of which are RAW (raw image file) photos. It should be understood that a quantity of photos in the photo frame sequence may be preset, for example, the quantity of photos in the photo frame sequence may be 8, that is, the photo frame sequence includes eight frames of photos.

In an embodiment, the frame selection module may select a frame of photo with highest clarity from the photo frame sequence, and take the frame of photo with the highest clarity as a target frame.

S304: The frame selection module sends the target frame to the shooting decision-making module.

S305: The shooting decision-making module generates a thumbnail based on the target frame.

In an embodiment, the shooting decision-making module may convert the target frame to a YUV format, and then convert the target frame in the YUV format to an RGB format, to obtain the thumbnail.

S306: The shooting decision-making module feeds back the thumbnail to the camera application.

S307: The camera application displays the thumbnail in a thumbnail display region.

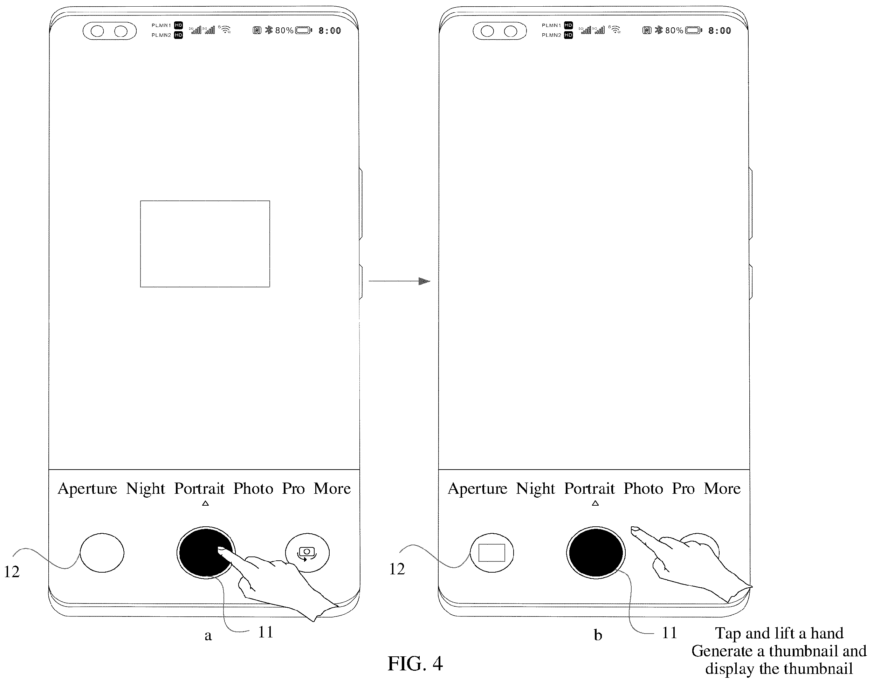

Refer to FIG. 4. When the user presses a shooting control 11 and lifts the hand, the terminal may be triggered to perform S301 to S307, to enable the terminal to display the thumbnail in the thumbnail display region. The duration taken from the time at which the user taps the shooting control 11 to the time at which the thumbnail is displayed in a thumbnail display region 12 is the process in which the terminal performs S301 to S307, about 1s.

Because the terminal performs S301 to S307 when the user taps the shooting control and lifts the hand, the duration taken from a time at which the user taps the shooting control 11 to from a time at which the thumbnail is displayed is the process in which the terminal performs S301 to S307. In this embodiment of this application, to reduce duration of displaying the thumbnail after the user taps the shooting control 11, a pipeline (may be a private pipeline) is disposed in the terminal. Through the pipeline, the thumbnail is generated when the user presses the shooting control and displays the thumbnail when the user lifts the hand. In this way, the process of generating the thumbnail is shifted forward, and the terminal only needs to perform the step of displaying the thumbnail when the user lifts the hand, so that the user can quickly view the thumbnail, and perceive that a shooting speed of the terminal is fast. It should be understood that the user presses the shooting control and lifts the hand may be referred to as a tap on the shooting control.

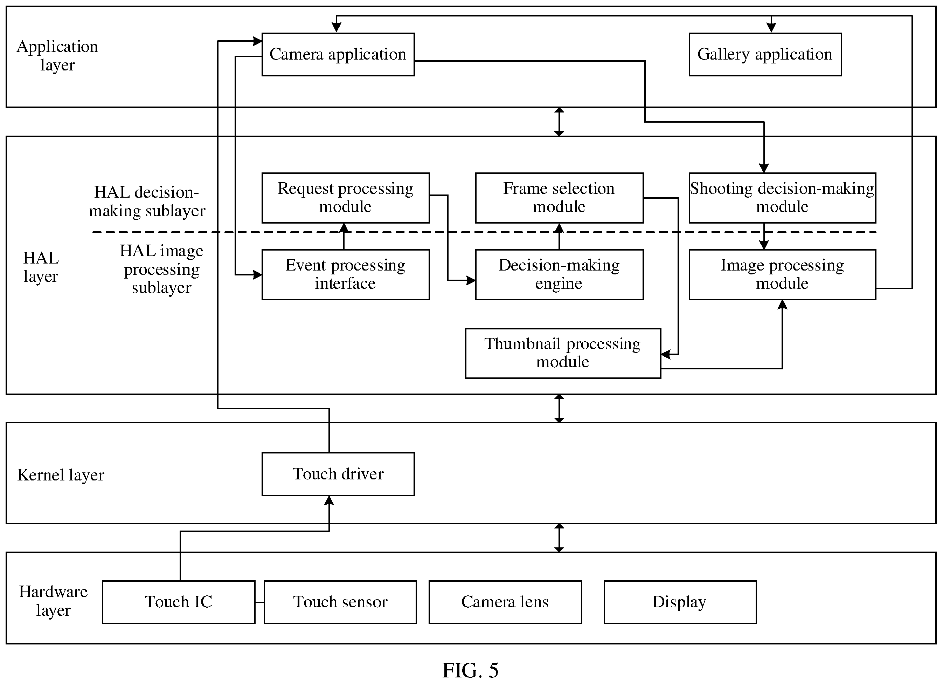

Before proceeding to the method for displaying a thumbnail during shooting provided in this embodiment of this application, a structure of the terminal is first described. FIG. 5 is a block diagram of another structure of a terminal according to an embodiment of this application. For an application layer, a hardware abstraction layer, and a request processing module, a frame selection module, and a shooting decision-making module in the hardware abstraction layer in FIG. 5, refer to related description in FIG. 2.

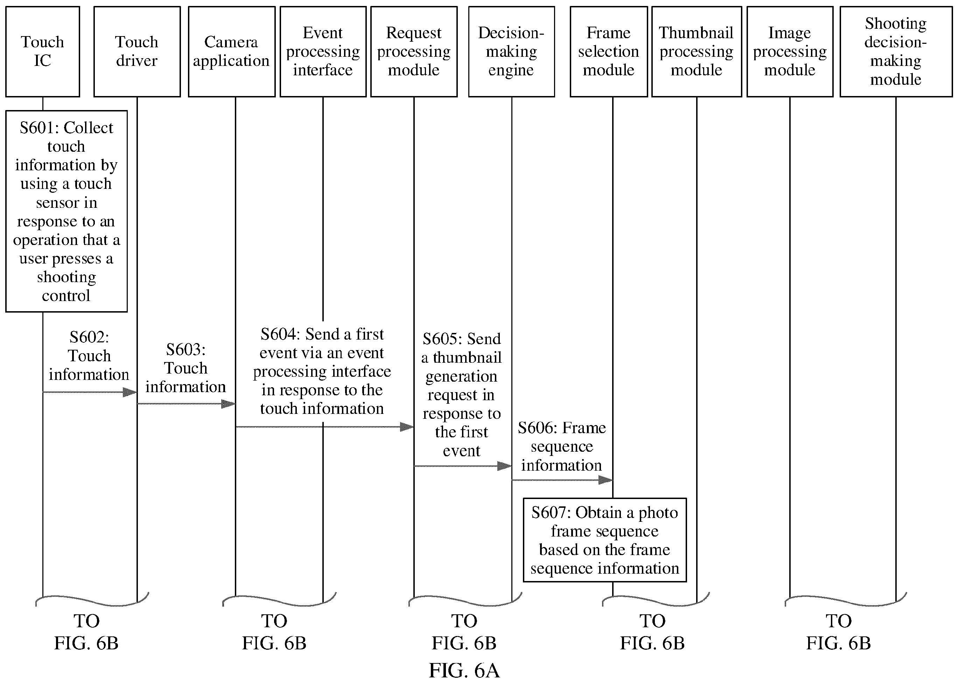

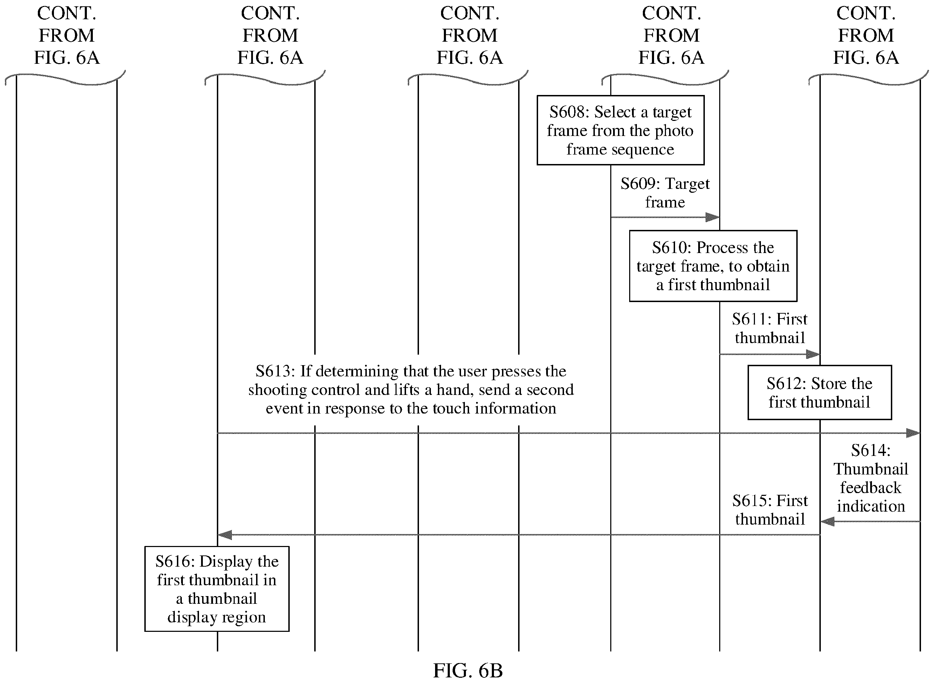

A difference from FIG. 2 is that, in an embodiment, as shown in FIG. 5, the hardware abstraction layer may further include: an event processing interface, a decision-making engine, a thumbnail processing module, and an image processing module. For functions of modules in the hardware abstraction layer, refer to related description in FIG. 6A and FIG. 6B.

In an embodiment, the hardware abstraction layer may include: a HAL image processing sublayer and a HAL decision-making sublayer. The event processing interface, the decision-making engine, the thumbnail processing module, and the image processing module may be disposed in the HAL image processing sublayer. The request processing module, the frame selection module, and the shooting decision-making module may be disposed in the HAL decision-making sublayer.

In an embodiment, the event processing interface, the decision-making engine, the thumbnail processing module, and the image processing module may be referred to as nodes in the pipeline (pipeline) disposed in the terminal. The nodes perform different steps, and the nodes cooperate with each other to complete generation of the thumbnail.

In an embodiment, FIG. 5 shows a kernel layer. The kernel layer includes at least a driver for hardware, and the driver is configured to drive the hardware to work. For example, the kernel layer may include a touch driver, a display driver, and the like, and is not limited in this embodiment of this application. The touch driver is configured to display a touch function of the terminal, and the display driver is configured to implement a display function of the terminal. It should be understood that FIG. 5 shows the touch driver in embodiments of this application.

Based on a terminal software layer architecture, as shown in FIG. 5, the terminal further includes a hardware layer. The hardware layer may include a hardware device. The hardware device, for example, a touch panel, a display panel (may be referred to as a display or a screen), a Bluetooth chip, an accelerometer sensor, or a gyroscope sensor, is not described herein. FIG. 5 shows the touch panel (a touch IC and a touch sensor), the camera lens, and the display in embodiments of this application.

The camera lens is configured to shoot (or take a photo), to obtain a photo stream. In an embodiment, the photo stream may be referred to as a shooting stream.

In an embodiment, the touch panel may include: a touch sensor (a TP sensor) and a touch integrated circuit (integrated circuit chip, IC). The touch driver is configured to drive the touch IC to work.

Layering of a software structure of the terminal is not limited in embodiments of this application. FIG. 5 shows an example. Modules included in layers shown in FIG. 5 are modules in embodiments of this application. The modules in the layers do not constitute a limitation to the structure of the terminal, and the layers (illustrated in the example) deployed in the modules do not constitute a limitation to the structure of the terminal. In an embodiment, modules shown in FIG. 5 may be deployed separately, or several modules may be deployed together, and division of the modules in FIG. 5 is an example. In an embodiment, names of the modules shown in FIG. 5 are examples for description.

Based on the structure of the terminal shown in FIG. 5, the following describes the method for displaying a thumbnail during shooting in embodiments of this application with reference to specific embodiments. The following several embodiments may be mutually combined, and same or similar concepts or processes may not be repeatedly described in some embodiments.

FIG. 6A and FIG. 6B are schematic flowchart of a method for displaying a thumbnail during shooting according to an embodiment of this application. As shown in FIG. 6A and FIG. 6B, the method for displaying a thumbnail during shooting according to an embodiment of this application may include the following steps.

S601: A touch IC collects touch information by using a touch sensor in response to an operation that a user presses a shooting control.

The operation that the user presses the shooting control may be understood as that the user presses the shooting control and does not lift a hand.

It should be understood that variation of a capacitance sampling value of the touch sensor changes when a finger of the user approaches a screen. Accordingly, the touch IC can obtain the variation of the capacitance sampling value of the touch sensor in real time.

In an embodiment, when the finger of the user gradually approaches the screen, the touch IC detects that the variation of the capacitance sampling value of the touch sensor gradually increases. When the touch IC detects that the variation of the capacitance sampling value of the touch sensor increases to preset variation of the capacitance sampling value, the touch IC may determine that the finger of the user is in contact with the screen. In other words, when the touch IC detects that the variation of the capacitance sampling value of the touch sensor reaches the preset variation of the capacitance sampling value and determines that the finger of the user is in contact with the screen, the touch IC obtains a position of the finger of the user on the screen based on the variation of the capacitance sampling value of the touch sensor. For example, when the touch IC responds to a case in which the variation of the capacitance sampling value of the touch sensor is greater than or equal to 100% (that is, the finger of the user is in contact with the screen), the touch IC obtains the position of the finger of the user on the screen.

In an embodiment, the touch information may include: a touch position.

In an embodiment, if a terminal supports an operation of a stylus, the touch IC may further determine, based on an area of a change of the variation of the capacitance sampling value of the touch sensor, whether the stylus or the finger of the user approaches the screen. An area of a change of the variation of the capacitance sampling value of the touch sensor in a case of the finger of the user is larger than an area of a change of the variation of the capacitance sampling value of the touch sensor in a case of stylus. If the area of the change of the variation of the capacitance sampling value of the touch sensor is larger than a preset area, the touch IC determines that the finger of the user approaches the screen. Therefore, it may be determined that a touch type is a user type. If the touch IC determines that the stylus approaches the screen, it is determined that the touch type is a stylus type. In the following embodiments, an example in which the touch type is the user type is used for description.

In this embodiment, the touch information of the user may include: the touch position, and a user type. The user type indicates that it is the finger of the user that approaches the screen, not the stylus.

In an embodiment, when determining that the variation of the capacitance sampling value of the touch sensor increases to the preset variation of the capacitance sampling value, the touch IC may report the variation of the capacitance sampling value of the touch sensor and the user type to a touch driver, and the touch driver determines the touch position based on the variation of the capacitance sampling value of the touch sensor, and reports the touch position.

S602: The touch IC sends the touch information to the touch driver.

S603: The touch driver sends the touch information to a camera application.

S604: The camera application sends a first event to a request processing module via an event processing interface in response to the touch information.

The camera application receives the touch information, and may determine, based on the touch position in the touch information and layout of a camera interface, that the user presses the shooting control. The camera application may generate the first event in response to a case in which the user presses the shooting control. The first event may be referred to as a clickdown event, and indicates that the user presses the shooting control.

In an embodiment, the first event is used to trigger generation of a thumbnail.

S605: The request processing module sends a thumbnail generation request to a decision-making engine in response to the first event.

The thumbnail generation request indicates the decision-making engine to generate the thumbnail.

S606: The decision-making engine sends frame sequence information to a frame selection module in response to the thumbnail generation request.

The frame sequence information indicates a type of a photo frame and a frame quantity N. For example, the frame sequence information may include: a quantity of frames of photos in a zsl frame type, and/or a quantity of frames of photos in a non zsl frame type.

S607: The frame selection module obtains a photo frame sequence based on the frame sequence information.

It should be understood that the camera application may start a camera lens when the user opens the camera application. The camera lens may capture a photo stream by photosensing. The frame selection module may select, based on the frame sequence information, N frames of photos in a corresponding type from the photo stream in response to the frame sequence information synchronized by the decision-making engine, to obtain the photo frame sequence. For example, the photo frame sequence may include eight frames of photos, all of which are RAW images.

S608: The frame selection module selects a target frame from the photo frame sequence.

In an embodiment, the target frame may be a photo with highest clarity in the photo frame sequence. In an embodiment, the clarity of the photo may be represented with at least one of the following parameters: a resolution, and a detection operator. The detection operator may include, but is not limited to: a laplace operator, a teneegrad operator, and an energy gradient function. The frame selection module may detect the clarity of the photo based on the at least one parameter.

For example, the resolution is used as an example. The frame selection module may take a photo with highest clarity in the photo frame sequence as the photo with the highest clarity, and take the photo with the highest clarity as the target frame.

In an embodiment, the frame selection module may select the target frame from the photo frame sequence based on a shooting parameter of each photo in the photo frame sequence. For example, the frame selection module may take a photo with a largest focus value (focus value) in the photo frame sequence as the target frame. Alternatively, the frame selection module may take a photo with largest photosensitivity ISO as the target frame.

For example, the photo frame sequence includes eight frames of photos, and the frame selection module may select a photo with highest clarity from the eight frames of photos, and take the photo with the highest clarity as the target frame.

S609: The frame selection module sends the target frame to a thumbnail processing module.

S610: The thumbnail processing module processes the target frame, to obtain a first thumbnail.

The target frame is a RAW image. The thumbnail processing module may convert the target frame to a YUV format, and convert the target frame in the YUV format to an RGB format, to obtain the first thumbnail.

In an embodiment, a size of the first thumbnail may be different from a size of the target frame. The thumbnail processing module may further change the size of the target frame in the RGB format, to obtain a first thumbnail with a preset size.

S611: The thumbnail processing module sends the first thumbnail to an image processing module.

S612: The image processing module stores the first thumbnail.

It should be understood that generation of the first thumbnail is performed when the user presses the shooting control but does not lift the hand.

S613: If determining that the user presses the shooting control and lifts the hand, the camera application sends a second event to a shooting decision-making module in response to the touch information.

When the camera application determines that the user presses the shooting control, S605 to S612 may be performed. In a process in which S605 to S612 are performed, the touch IC continuously obtains the touch information, and reports the touch information to the camera application via the touch driver. The touch information indicates an operation of the user to operate on a screen of the terminal.

If the camera application determines that the user presses the shooting control and lifts the hand, the camera application sends the second event to the shooting decision-making module in response to the touch information. In an embodiment, the second event may be referred to as a clickup event. The second event is used to trigger the terminal to display the first thumbnail.

S614: The shooting decision-making module sends a thumbnail feedback indication to the image processing module.

In an embodiment, if determining that the user presses the shooting control and lifts the hand, the camera application may directly send the thumbnail feedback indication to the image processing module in response to the touch information, to enable the image processing module to perform S615.

S615: The image processing module feeds back the first thumbnail to the camera application.

S616: The camera application displays the first thumbnail in a thumbnail display region.

For the terminal, when the user presses the shooting control in a shooting interface but does not lift the hand, the terminal may generate the first thumbnail. When the user lifts the hand, the terminal displays the first thumbnail in the thumbnail display region of the shooting interface.

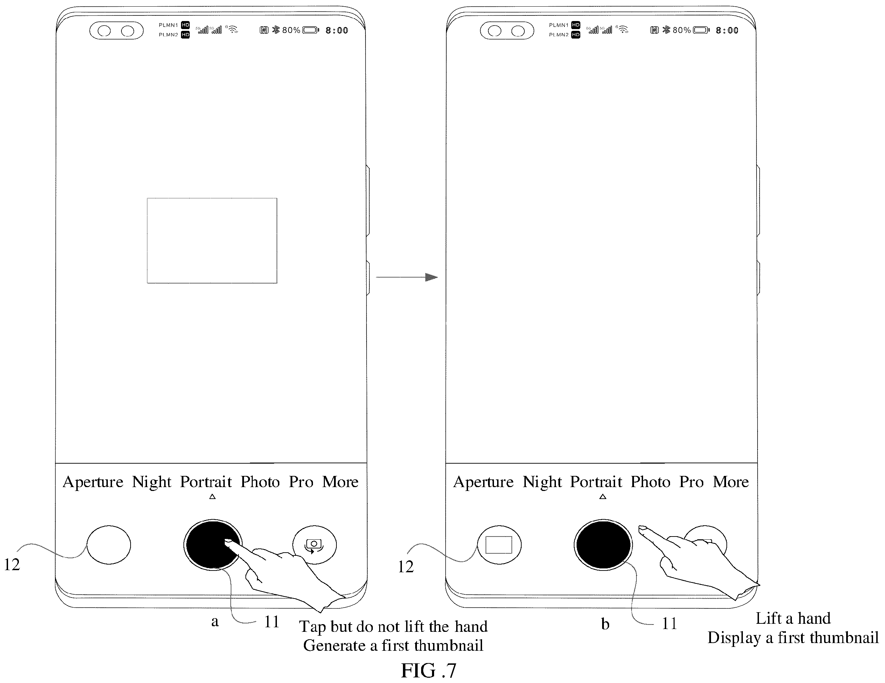

Refer to A and B in FIG. 7. When the user presses the shooting control 11, the terminal may perform S601 to S612, to generate the first thumbnail. When the user lifts the hand, the terminal may perform S613 to S616, to display the first thumbnail. In comparison with a procedure in FIG. 3, the user needs to perform an operation of generating the first thumbnail and the operation of displaying the first thumbnail when lifting the hand in FIG. 3. Therefore, long duration is taken. In this embodiment of this application, the operation of generating the first thumbnail is shifted before the operations that "the user presses the shooting control 11 and the user lifts the hand". Therefore, only the operation of displaying the first thumbnail needs to be performed when the user lifts the hand, without performing, with long duration, an operation of generating the first thumbnail. This reduces the duration taken from a time at which the user taps the shooting control 11 to the time at which the first thumbnail is displayed, to enable the user to quickly view the first thumbnail, and improve a shooting speed of the terminal.

Because it takes at least 100 ms from the time for the user to press the shooting control 11 to the time for the user to lift the hand, and because the operation of generating the first thumbnail is shifted forward, the first thumbnail is directly displayed when the user lifts the hand. In this embodiment of this application, the duration taken from the time at which the user taps the shooting control 11 to the time at which the thumbnail is displayed is approximately 200 ms. In comparison with the manner in FIG. 3, the duration taken from the time at which the user taps the shooting control 11 to the time at which the thumbnail is displayed is reduced, and performance of shot2see of the terminal is improved.

In an embodiment, after receiving the first thumbnail from the image processing module, the camera application may further store the first thumbnail in a gallery application.

In an embodiment, some of the steps shown in FIG. 6A and FIG. 6B are optional and the steps may be combined with each other. In an embodiment, the modules shown in FIG. 6A and FIG. 6B may also be combined, and the combined modules are used to perform at least one of the steps in FIG. 6A and FIG. 6B.

In an embodiment of this application, an operation of generating the thumbnail can be performed when the user presses the shooting control, and the thumbnail is directly displayed when the user lifts the hand. In this embodiment of this application, the operation of generating the thumbnail is shifted before the operations that "the user presses the shooting control 11 and the user lifts the hand". Therefore, only the operation of displaying the thumbnail needs to be performed when the user lifts the hand, without performing, with the long duration, the operation of generating the thumbnail. This reduces the duration taken from the time at which the user taps the shooting control to the time at which the thumbnail is displayed, to improve the performance of shot2see of the terminal, and enable the user to perceive that the shooting speed of the terminal is fast.

In an embodiment, when (or after) the image processing module receives the first thumbnail from the thumbnail processing module or when the image processing module receives the thumbnail feedback indication from the shooting decision-making module, the image processing module may further perform S617 to S621.

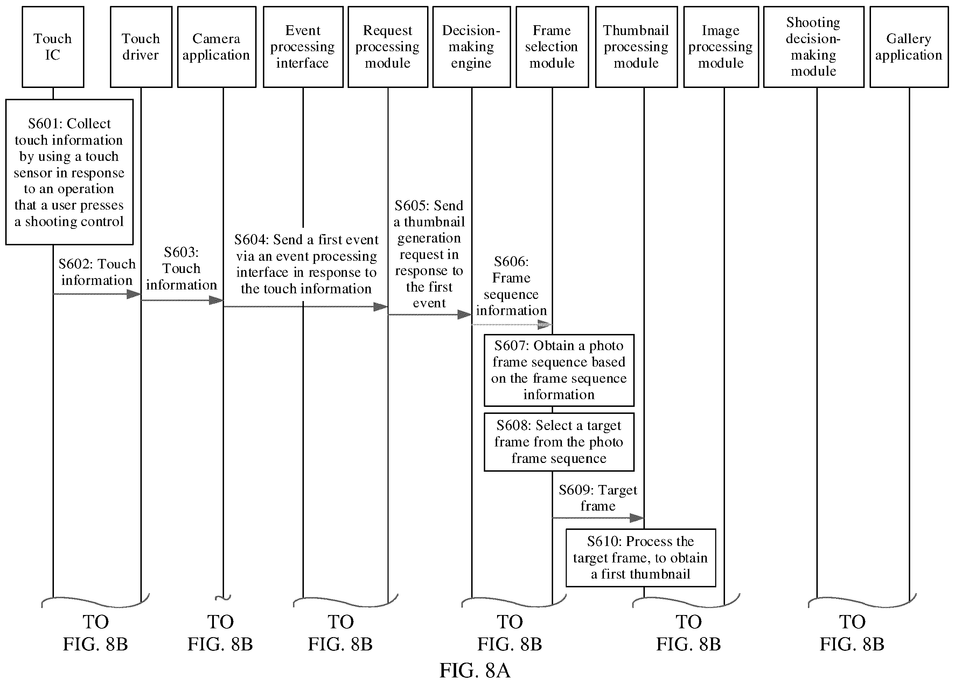

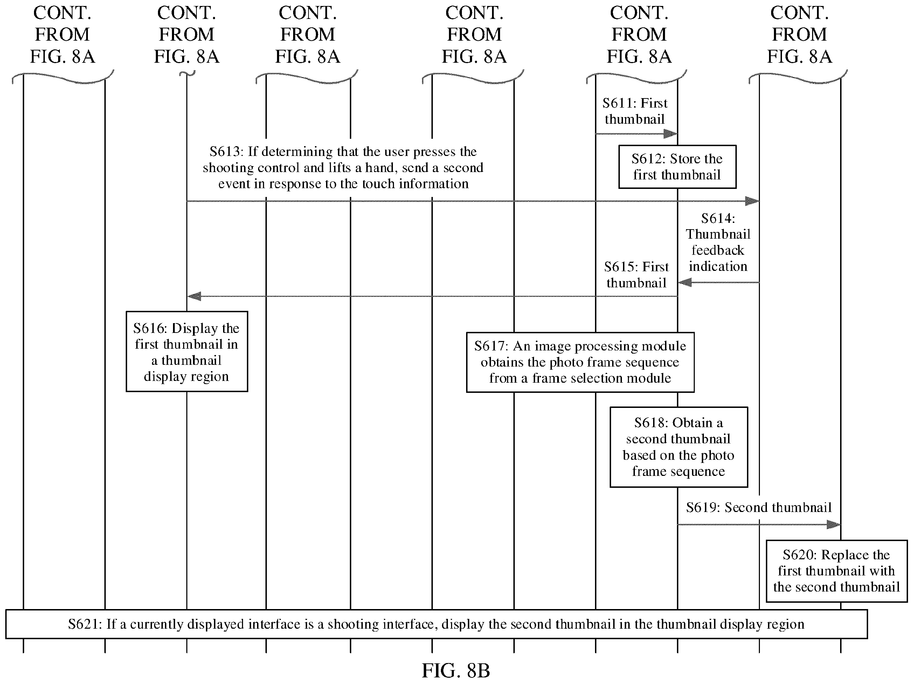

An example in which S617 to S621 are performed after S614 in FIG. 8A and FIG. 8B is used for description. It should be understood that S617 to S621 and S615 to S616 may be performed simultaneously.

S617: The image processing module obtains the photo frame sequence from the frame selection module.

The frame selection module may obtain the photo frame sequence, and the image processing module may obtain the photo frame sequence from the frame selection module. For example, the image processing module may send a request for the photo frame sequence to the frame selection module in response to the thumbnail feedback indication, to indicate the frame selection module to feed back the photo frame sequence. Accordingly, the frame selection module may feed back the photo frame sequence to the image processing module in response to the photo frame sequence request.

S618: The image processing module obtains a second thumbnail based on the photo frame sequence.

In an embodiment, the second thumbnail may be obtained after being processed by the photo frame sequence.

In an embodiment, the image processing module may fuse photos in the photo frame sequence, to obtain a fused photo frame. For example, the image processing module may compare the clarity of regions in the photos in the photo frame sequence (for example, the eight frames of photos), and fuse regions with highest clarity, to obtain the fused photo frame. The fused photo frame is a RAW image.

The image processing module may convert the fused photo frame to a YUV format, and convert the fused photo frame in the YUV format to an RGB format, to obtain the second thumbnail.

S619: The image processing module feeds back the second thumbnail to the gallery application.

S620: The gallery application replaces the first thumbnail with the second thumbnail.

S621: If a currently displayed interface is the shooting interface, display the second thumbnail in the thumbnail display region.

In an embodiment, some of the steps shown in FIG. 8A and FIG. 8B are optional and the steps may be combined with each other. In an embodiment, the modules shown in FIG. 8A and FIG. 8B may also be combined, and the combined modules are used to perform at least one of the steps in FIG. 8A and FIG. 8B.

In this embodiment of this application, on the basis of the user perceiving that the shooting speed of the terminal is fast, photo frame sequences may be fused, to obtain a RAW image, and the second thumbnail may be generated based on the RAW image, to display the second thumbnail in the thumbnail display region. In an embodiment, clarity of the second thumbnail is higher than clarity of the first thumbnail, so that the user can view a clearer thumbnail in the thumbnail display region.

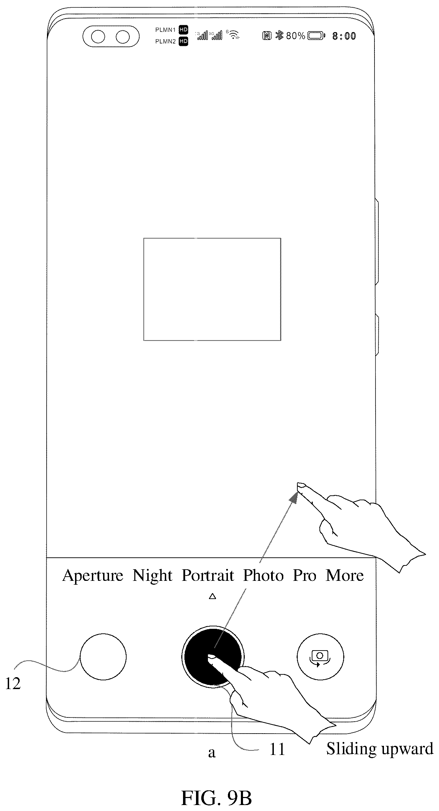

Refer to FIG. 7. If the user taps the shooting control (including the operation of pressing and the operation of lifting the hand), the terminal can be triggered to quickly display the thumbnail. In an embodiment, the user may also operate the shooting control in other manners. Refer to A to C in FIG. 9A. When the user presses the shooting control and pressing duration is more than preset duration, the terminal may be triggered to perform continuous shooting (that is, continuously take a plurality of photos). Refer FIG. 9B. Alternatively, the user may accidentally touch (press) the shooting control in a sliding process. Sliding may be understood that the user performs a sliding (for example, sliding upward or downward) operation on the screen.

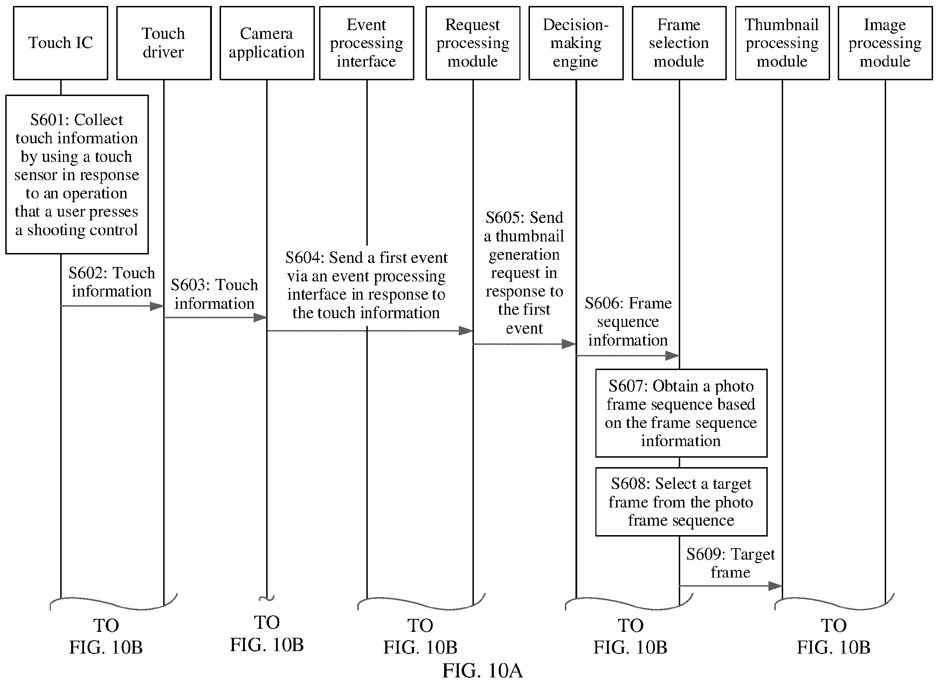

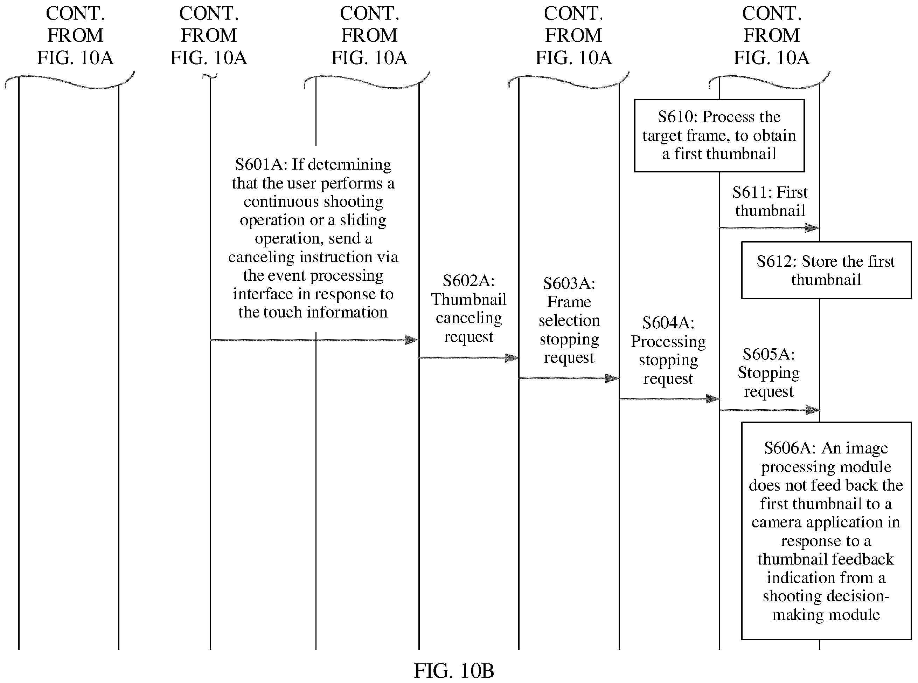

As shown in FIG. 9A and FIG. 9B, regardless of the continuous shooting operation or the sliding operation, the user presses the shooting control, to trigger the terminal to perform S601 to S612. Refer to FIG. 10A and FIG. 10B. In a process in which the terminal performs S601 to S612 (an example in which the terminal performs S601 to S612 in FIG. 10A and FIG. 10B is used for description), the terminal may further perform S601A to S606A.

S601A: If determining that the user performs the continuous shooting operation or the sliding operation, the camera application sends a canceling instruction to the request processing module via the event processing interface in response to the touch information.

Because the touch IC continuously obtains the touch information, and reports the touch information to the camera application via the touch driver, the camera application may detect an operation of the user based on the touch information. If detecting that the user performs the continuous shooting operation or the sliding operation, the camera application may send the canceling instruction to the request processing module via the event processing interface based on the touch information. The canceling instruction indicates to cancel generation of the thumbnail. Correspondingly, the camera application may trigger the terminal to perform the continuous shooting operation or an operation in response to the sliding operation. In an embodiment, the canceling instruction may be referred to as a command to cancel capturing of cancelCapture.

In an embodiment, the touch information may include a touch position. The camera application may detect the operation of the user based on the touch information that is continuously reported by the touch IC. If determining that duration that the user taps the shooting control is more than the preset duration, the camera application may determine that the user performs the continuous shooting operation. If determining that the user continuously taps another position on the screen after tapping the shooting control, the camera application may determine, based on the touch information, that the user performs the sliding operation.

S602A: The request processing module sends a thumbnail canceling request to the decision-making engine.

The thumbnail canceling request indicates to stop generating the thumbnail.

In an embodiment, when the decision-making engine receives the thumbnail canceling request from the request processing module, if the decision-making engine does not send the frame sequence information to the frame selection module, the decision-making engine may stop sending the frame sequence information to the frame selection module. When the decision-making engine receives the thumbnail canceling request from the request processing module, if the decision-making engine has sent the frame sequence information to the frame selection module, the decision-making engine may perform S603A.

S603A: The decision-making engine sends a frame selection stopping request to the frame selection module.

The frame selection stopping request indicates the frame selection module to stop frame selection.

In an embodiment, when the frame selection module receives the frame selection stopping request from the decision-making engine, if the frame selection module is selecting the target frame from the photo frame sequence, the frame selection module may stop performing the frame selection operation (that is, stop selecting the target frame). When the frame selection module receives the frame selection stopping request from the decision-making engine, if the frame selection module has selected the target frame but does not send the target frame to the thumbnail processing module, the frame selection module may stop sending the target frame to the thumbnail processing module. When the frame selection module receives the frame selection stopping request from the decision-making engine, if the frame selection module has sent the target frame to the thumbnail processing module, the frame selection module may perform S604A.

S604A: The frame selection module sends a processing stopping request to the thumbnail processing module.

The processing stopping request indicates the thumbnail processing module to stop generating the thumbnail.

In an embodiment, when the thumbnail processing module receives the processing stopping request from the frame selection module, if the thumbnail processing module is generating the thumbnail based on the target frame, the thumbnail processing module may stop processing the target frame. When the thumbnail processing module receives the processing stopping request from the frame selection module, if the thumbnail processing module has generated the thumbnail based on the target frame but does not send the thumbnail to the image processing module, the thumbnail processing module may stop sending the thumbnail to the image processing module. When the thumbnail processing module receives the processing stopping request from the frame selection module, if the thumbnail processing module has sent the thumbnail to the image processing module, the thumbnail processing module may perform S605A.

S605A: The thumbnail processing module sends a stopping request to the image processing module.

The stopping request indicates the image processing module to stop feeding back the thumbnail to the camera application.

S606A: The image processing module does not feed back the thumbnail to the camera application in response to the thumbnail feedback indication from the shooting decision-making module.

In this embodiment of this application, the user performs the continuous shooting operation or the sliding operation, not triggering shooting and displaying the thumbnail. Therefore, on the premise of receiving the stopping request, when the image processing module receives the thumbnail feedback indication from the shooting decision-making module, the image processing module does not feed back the thumbnail to the camera application.

In this embodiment of this application, the thumbnail may be generated when the user presses the shooting control. However, if it is determined, based on the touch information, that the operation of the user is the continuous shooting operation or the sliding operation, in the process of generating the thumbnail, the operation of generating the thumbnail may be canceled, to trigger the terminal to perform the continuous shooting operation or perform the operation in response to the sliding operation, to implement an accurate response.

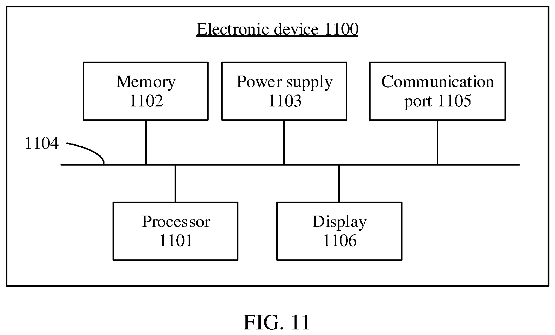

Refer to FIG. 11. In an embodiment, an embodiment of this application further provides an electronic device. The electronic device may be the terminal in the foregoing embodiments. The electronic device 1100 may include: a processor 1101 (for example, a CPU) and a memory 1102. The memory 1102 may include a high-speed random-access memory (random-access memory, RAM), or may further include a non-volatile memory (non-volatile memory, NVM), for example, at least one magnetic disk memory. The memory 1102 may store various instructions, which are configured to implement various processing functions and implement method steps of this application.

Optionally, the electronic device 1100 in this application may further include a power supply 1103, a communication bus 1104, and a communication port 1105. The foregoing communication port 1105 is configured to implement connection and communication between the electronic device 1100 and another peripheral. In this embodiment of this application, the memory 1102 is configured to store computer-executable program code. The program code includes instructions. When the processor 1101 executes the instructions, the instructions enable the processor 1101 of the electronic device 1100 to perform actions in the foregoing method embodiments. An implementation principle and technical effects are similar to those in the foregoing method embodiments. Details are not described herein again.

In an embodiment, the electronic device 1100 may include a display 1106. The display 1106 is configured to display an interface of the electronic device 1100. In an embodiment, the display 1106 may also be referred to as a screen.

It should be noted that the modules or components in the foregoing embodiments may be one or more integrated circuits configured to implement the foregoing method, for example, one or more application specific integrated circuits (application specific integrated circuit, ASIC), one or more microprocessors (digital signal processor, DSP), or one or more field programmable gate arrays (field programmable gate array, FPGA). For another example, when a module described above is implemented in a form of scheduling program code by a processing element, the processing element may be a general-purpose processor, for example, a central processing unit (central processing unit, CPU), or another processor that may call the program code, such as a controller. For another example, such modules may be integrated together and implemented in a form of a system-on-a-chip (system-on-a-chip, SOC).

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, that includes an integration of one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

The term "a plurality of" in this specification means two or more than two. In this specification, the term "and/or" is merely used to describe an association relationship between associated objects, and indicates that three relationships may exist. For example, "A and/or B" may indicate the following three cases: Only A exists, both A and B exist, and only B exists. In addition, the character "/" in this specification usually indicates an "or" relationship between associated objects. In a formula, the character "/" indicates that the associated objects are in a "division" relationship. In addition, it should be understood that in descriptions of this application, terms such as "first" and "second" are merely used for distinguishing descriptions, and should not be understood as an indication or implication of relative importance or as an indication or implication of an order.

## Claims

1. A method for displaying a thumbnail during shooting, comprising:
generating a first thumbnail in a shooting interface of a terminal when a user presses a shooting control in the shooting interface but does not lift a hand; and
displaying the first thumbnail in a thumbnail display region of the shooting interface when the user lifts the hand,
wherein the terminal comprises: a camera application, a thumbnail processing module, and an image processing module; and the generating a first thumbnail comprises:
when the user presses the shooting control but does not lift the hand, controlling, by the camera application, the thumbnail processing module to generate the first thumbnail;
sending, by the thumbnail processing module, the first thumbnail to the image processing module (S611);
feeding back, by the image processing module, the first thumbnail to the camera application when the user lifts the hand (S615); and
controlling, by the camera application, the terminal to display the first thumbnail in the thumbnail display region (S616),
wherein the terminal further comprises: a request processing module, a decision-making engine, and a frame selection module; and the controlling, by the camera application, the thumbnail processing module to generate the first thumbnail comprises:
when the user presses the shooting control but does not lift the hand, sending, by the camera application, a first event to the request processing module (S604), wherein the first event indicates to generate the thumbnail;
sending, by the request processing module, a thumbnail generation request to the decision-making engine in response to the first event (S605);
sending, by the decision-making engine, frame sequence information to the frame selection module in response to the thumbnail generation request (S606);
obtaining, by the frame selection module, a photo frame sequence based on the frame sequence information (S607), wherein the photo frame sequence comprises at least two photos;
selecting, by the frame selection module, a target frame from the photo frame sequence (S608);
sending, by the frame selection module, the target frame to the thumbnail processing module (S609); and
generating, by the thumbnail processing module, the first thumbnail based on the target frame (S610),
wherein the terminal further comprises: a shooting decision-making module, and the feeding back, by the image processing module, the first thumbnail to the camera application when the user lifts the hand comprises:
when the user lifts the hand, sending, by the camera application, a second event to the shooting decision-making module (S613), wherein the second event indicates to display the thumbnail;
sending, by the shooting decision-making module, a thumbnail feedback indication to the image processing module in response to the second event (S614); and
feeding back, by the image processing module, the first thumbnail to the camera application in response to the thumbnail feedback indication (S615), and
wherein after the sending, by the camera application, a first event to the request processing module, the method further comprises:
if an operation performed by the user in the shooting interface is a continuous shooting operation or a sliding operation, sending, by the camera application, a canceling instruction to the request processing module (S601A), wherein the canceling instruction indicates to cancel generation of the thumbnail, and the continuous shooting operation and the sliding operation each comprise: an operation that the user presses the shooting control;
sending, by the request processing module, a thumbnail canceling request to the decision-making engine (S602A);
when the decision-making engine sends the frame sequence information to the frame selection module, sending, by the decision-making engine, a frame selection stopping request to the frame selection module (S603A);
when the frame selection module sends the target frame to the thumbnail processing module, sending, by the frame selection module, a processing stopping request to the thumbnail processing module (S604A);
when the thumbnail processing module sends the first thumbnail to the image processing module, sending, by the thumbnail processing module, a stopping request to the image processing module (S605A); and
when the image processing module receives the thumbnail feedback indication from the shooting decision-making module, skipping feeding back, by the image processing module, the first thumbnail to the camera application (S606A),
wherein the target frame is a photo with highest clarity in the photo frame sequence.

2. The method according to claim 1, wherein the selecting, by the frame selection module, a target frame from the photo frame sequence comprises:
selecting, by the frame selection module, the target frame from the photo frame sequence based on a shooting parameter of each photo in the photo frame sequence.

3. The method according to any one of claims 1 or 2, wherein the terminal further comprises: a gallery application, and after the feeding back, by the image processing module, the first thumbnail to the camera application, the method further comprises:
sending, by the camera application, the first thumbnail to the gallery application; and
storing, by the gallery application, the first thumbnail; and
after the image processing module receives the first thumbnail from the thumbnail processing module, the method further comprises:
obtaining, by the image processing module, the photo frame sequence from the frame selection module (S617);
generating, by the image processing module, a second thumbnail based on the photo frame sequence (S618);
sending, by the image processing module, the second thumbnail to the gallery application (S619); and
replacing, by the gallery application, the first thumbnail with the second thumbnail (S620).

4. The method according to claim 3, wherein after the replacing, by the gallery application, the first thumbnail with the second thumbnail, the method further comprises:
when the terminal displays the shooting interface, obtaining, by the camera application, the second thumbnail from the gallery application; and
controlling, by the camera application, the terminal to display the second thumbnail in the thumbnail display region.

5. The method according to any one of claims 1 to 4, wherein the terminal further comprises: an event processing interface, and the sending, by the camera application, a first event to the request processing module comprises:
sending, by the camera application, the first event to the request processing module via the event processing interface.

6. An electronic device (1100), comprising: a processor (1101), a memory (1102), a camera lens, a display, and a touch panel, wherein
the memory (1102) stores computer instructions; and
the processor (1101) executes the computer instructions stored in the memory (1102), to enable the processor (1101) to perform the method according to any one of claims 1 to 5.

7. A computer-readable storage medium, wherein the computer-readable storage medium stores computer programs or instructions, and when the computer programs or instructions are run on an electronic device according to claim 6, the method according to any one of claims 1 to 5 is implemented.

## Patentansprüche

1. Verfahren zum Anzeigen eines Vorschaubilds während der Aufnahme, umfassend:
Erzeugen eines ersten Vorschaubilds in einer Aufnahmeschnittstelle eines Endgeräts, wenn ein Benutzer ein Aufnahme-Steuerelement in der Aufnahmeschnittstelle drückt, aber die Hand nicht anhebt; und
Anzeigen des ersten Vorschaubilds in einem Vorschaubild-Anzeigebereich der Aufnahmeschnittstelle, wenn der Benutzer die Hand anhebt,
wobei das Endgerät umfasst: eine Kameraanwendung, ein Vorschaubild-Verarbeitungsmodul und ein Bildverarbeitungsmodul; und das Erzeugen eines ersten Vorschaubilds umfasst:
wenn der Benutzer das Aufnahme-Steuerelement drückt, aber die Hand nicht anhebt, Steuern des Vorschaubild-Verarbeitungsmoduls durch die Kameraanwendung, um das erste Vorschaubild zu erzeugen;
Senden des ersten Vorschaubilds durch das Vorschaubild-Verarbeitungsmodul an das Bildverarbeitungsmodul (S611);
Rückmelden des ersten Vorschaubilds durch das Bildverarbeitungsmodul an die Kameraanwendung, wenn der Benutzer die Hand anhebt (S615); und
Steuern des Endgeräts durch die Kameraanwendung, um das erste Vorschaubild im Vorschaubild-Anzeigebereich anzuzeigen (S616),
wobei das Endgerät ferner umfasst: ein Anforderungsverarbeitungsmodul, eine Entscheidungsmaschine und ein Einzelbildauswahlmodul; und das Steuern des Vorschaubild-Verarbeitungsmoduls durch die Kameraanwendung zum Erzeugen des ersten Vorschaubilds umfasst:
wenn der Benutzer das Aufnahme-Steuerelement drückt, aber die Hand nicht anhebt, Senden eines ersten Ereignisses durch die Kameraanwendung an das Anforderungsverarbeitungsmodul (S604), wobei das erste Ereignis anweist, das Vorschaubild zu erzeugen;
Senden einer Vorschaubild-Erzeugungsanforderung durch das Anforderungsverarbeitungsmodul an die Entscheidungsmaschine als Reaktion auf das erste Ereignis (S605);
Senden von Einzelbildsequenzinformationen durch die Entscheidungsmaschine an das Einzelbildauswahlmodul als Reaktion auf die Vorschaubild-Erzeugungsanforderung (S606);
Erhalten einer Foto-Einzelbildsequenz durch das Einzelbildauswahlmodul basierend auf den Einzelbildsequenzinformationen (S607), wobei die Foto-Einzelbildsequenz mindestens zwei Fotos umfasst;
Auswählen eines Ziel-Einzelbilds aus der Foto-Einzelbildsequenz durch das Einzelbildauswahlmodul (S608);
Senden des Ziel-Einzelbilds durch das Einzelbildauswahlmodul an das Vorschaubild-Verarbeitungsmodul (S609); und
Erzeugen des ersten Vorschaubilds durch das Vorschaubild-Verarbeitungsmodul basierend auf dem Ziel-Einzelbild (S610),
wobei das Endgerät ferner umfasst: ein Aufnahmeentscheidungsmodul, und wobei das Rückmelden des ersten Vorschaubilds durch das Bildverarbeitungsmodul an die Kameraanwendung, wenn der Benutzer die Hand anhebt, umfasst:
wenn der Benutzer die Hand anhebt, Senden eines zweiten Ereignisses durch die Kameraanwendung an das Aufnahmeentscheidungsmodul (S613), wobei das zweite Ereignis anweist, das Vorschaubild anzuzeigen;
Senden einer Vorschaubild-Rückmeldeanzeige durch das Aufnahmeentscheidungsmodul an das Bildverarbeitungsmodul als Reaktion auf das zweite Ereignis (S614); und
Rückmelden des ersten Vorschaubilds durch das Bildverarbeitungsmodul an die Kameraanwendung als Reaktion auf die Vorschaubild-Rückmeldeanzeige (S615), und
wobei das Verfahren nach dem Senden eines ersten Ereignisses durch die Kameraanwendung an das Anforderungsverarbeitungsmodul ferner umfasst:
wenn eine vom Benutzer in der Aufnahmeschnittstelle durchgeführte Operation eine Serienaufnahmeoperation oder eine Schiebeoperation ist, Senden eines Abbruchbefehls durch die Kameraanwendung an das Anforderungsverarbeitungsmodul (S601A), wobei der Abbruchbefehl anweist, die Erzeugung des Vorschaubilds abzubrechen, und wobei die Serienaufnahmeoperation und die Schiebeoperation jeweils eine Operation umfassen, bei der der Benutzer das Aufnahme-Steuerelement drückt;
Senden einer Vorschaubild-Abbruchanforderung durch das Anforderungsverarbeitungsmodul an die Entscheidungsmaschine (S602A);
wenn die Entscheidungsmaschine die Einzelbildsequenzinformationen an das Einzelbildauswahlmodul sendet, Senden einer Einzelbildauswahl-Stoppanforderung durch die Entscheidungsmaschine an das Einzelbildauswahlmodul (S603A);
wenn das Einzelbildauswahlmodul das Ziel-Einzelbild an das Vorschaubild-Verarbeitungsmodul sendet, Senden einer Verarbeitungsstoppanforderung durch das Einzelbildauswahlmodul an das Vorschaubild-Verarbeitungsmodul (S604A);
wenn das Vorschaubild-Verarbeitungsmodul das erste Vorschaubild an das Bildverarbeitungsmodul sendet, Senden einer Stoppanforderung durch das Vorschaubild-Verarbeitungsmodul an das Bildverarbeitungsmodul (S605A); und
wenn das Bildverarbeitungsmodul die Vorschaubild-Rückmeldeanzeige vom Aufnahmeentscheidungsmodul empfängt, Überspringen der Rückmeldung des ersten Vorschaubilds durch das Bildverarbeitungsmodul an die Kameraanwendung (S606A),
wobei das Ziel-Einzelbild ein Foto mit der höchsten Schärfe in der Foto-Einzelbildsequenz ist.

2. Verfahren nach Anspruch 1, wobei das Auswählen eines Ziel-Einzelbilds aus der Foto-Einzelbildsequenz durch das Einzelbildauswahlmodul umfasst:
Auswählen des Ziel-Einzelbilds aus der Foto-Einzelbildsequenz durch das Einzelbildauswahlmodul basierend auf einem Aufnahmeparameter jedes Fotos in der Foto-Einzelbildsequenz.

3. Verfahren nach einem der Ansprüche 1 oder 2, wobei das Endgerät ferner umfasst: eine Galerie-Anwendung, und nach dem Rückmelden des ersten Vorschaubilds durch das Bildverarbeitungsmodul an die Kamera-Anwendung, umfasst das Verfahren ferner:
Senden des ersten Vorschaubilds durch die Kamera-Anwendung an die Galerie-Anwendung; und
Speichern des ersten Vorschaubilds durch die Galerie-Anwendung; und
nachdem das Bildverarbeitungsmodul das erste Vorschaubild von dem Vorschaubild-Verarbeitungsmodul empfängt, umfasst das Verfahren ferner:
Erhalten der Foto-Einzelbildsequenz durch das Bildverarbeitungsmodul von dem Einzelbildauswahlmodul (S617);
Erzeugen eines zweiten Vorschaubilds durch das Bildverarbeitungsmodul basierend auf der Foto-Einzelbildsequenz (S618);
Senden des zweiten Vorschaubilds durch das Bildverarbeitungsmodul an die Galerie-Anwendung (S619); und
Ersetzen des ersten Vorschaubilds durch das zweite Vorschaubild durch die Galerie-Anwendung (S620).

4. Verfahren nach Anspruch 3, wobei nach dem Ersetzen des ersten Vorschaubilds durch das zweite Vorschaubild durch die Galerie-Anwendung das Verfahren ferner umfasst:
wenn das Endgerät die Aufnahmeschnittstelle anzeigt, Erhalten des zweiten Vorschaubilds durch die Kamera-Anwendung von der Galerie-Anwendung; und
Steuern des Endgeräts durch die Kamera-Anwendung, um das zweite Vorschaubild im Vorschaubild-Anzeigebereich anzuzeigen.

5. Verfahren nach einem der Ansprüche 1 bis 4, wobei das Endgerät ferner umfasst: eine Ereignisverarbeitungsschnittstelle, und wobei das Senden eines ersten Ereignisses durch die Kamera-Anwendung an das Anforderungsverarbeitungsmodul umfasst:
Senden des ersten Ereignisses durch die Kamera-Anwendung an das Anforderungsverarbeitungsmodul über die Ereignisverarbeitungsschnittstelle.

6. Elektronische Vorrichtung (1100), umfassend: einen Prozessor (1101), einen Speicher (1102), ein Kameraobjektiv, ein Display und ein Touchpanel, wobei
der Speicher (1102) Computeranweisungen speichert; und
der Prozessor (1101) die im Speicher (1102) gespeicherten Computeranweisungen ausführt, um den Prozessor (1101) zu befähigen, das Verfahren nach einem der Ansprüche 1 bis 5 durchzuführen.

7. Computerlesbares Speichermedium, wobei das computerlesbare Speichermedium Computerprogramme oder Anweisungen speichert, und wobei, wenn die Computerprogramme oder Anweisungen auf einer elektronischen Vorrichtung nach Anspruch 6 ausgeführt werden, das Verfahren nach einem der Ansprüche 1 bis 5 implementiert wird.

## Revendications

1. Procédé d'affichage d'une vignette pendant la prise de vue, comprenant :
la génération d'une première vignette dans une interface de prise de vue d'un terminal lorsqu'un utilisateur appuie sur une commande de prise de vue dans l'interface de prise de vue mais ne lève pas la main ; et
l'affichage de la première vignette dans une zone d'affichage de vignette de l'interface de prise de vue lorsque l'utilisateur lève la main,
dans lequel le terminal comprend : une application d'appareil photo, un module de traitement de vignette et un module de traitement d'image ; et la génération d'une première vignette comprend :
lorsque l'utilisateur appuie sur la commande de prise de vue mais ne lève pas la main, la commande, par l'application d'appareil photo, du module de traitement de vignette pour générer la première vignette ;
l'envoi, par le module de traitement de vignette, de la première vignette au module de traitement d'image (S611) ;
le renvoi, par le module de traitement d'image, de la première vignette à l'application d'appareil photo lorsque l'utilisateur lève la main (S615) ; et
la commande, par l'application d'appareil photo, du terminal pour afficher la première vignette dans la zone d'affichage de vignette (S616),
dans lequel le terminal comprend en outre : un module de traitement de requête, un moteur de prise de décision et un module de sélection de trame ; et la commande, par l'application d'appareil photo, du module de traitement de vignette pour générer la première vignette comprend :
lorsque l'utilisateur appuie sur la commande de prise de vue mais ne lève pas la main, l'envoi, par l'application d'appareil photo, d'un premier événement au module de traitement de requête (S604), dans lequel le premier événement indique de générer la vignette ;
l'envoi, par le module de traitement de requête, d'une requête de génération de vignette au moteur de prise de décision en réponse au premier événement (S605) ;
l'envoi, par le moteur de prise de décision, d'informations de séquence de trames au module de sélection de trame en réponse à la requête de génération de vignette (S606) ;
l'obtention, par le module de sélection de trame, d'une séquence de trames photo sur la base des informations de séquence de trames (S607), dans lequel la séquence de trames photo comprend au moins deux photos ;
la sélection, par le module de sélection de trame, d'une trame cible à partir de la séquence de trames photo (S608) ;
l'envoi, par le module de sélection de trame, de la trame cible au module de traitement de vignette (S609) ; et
la génération, par le module de traitement de vignette, de la première vignette sur la base de la trame cible (S610),
dans lequel le terminal comprend en outre : un module de prise de décision de prise de vue, et le renvoi, par le module de traitement d'image, de la première vignette à l'application d'appareil photo lorsque l'utilisateur lève la main comprend :
lorsque l'utilisateur lève la main, l'envoi, par l'application d'appareil photo, d'un second événement au module de prise de décision de prise de vue (S613), dans lequel le second événement indique d'afficher la vignette ;
l'envoi, par le module de prise de décision de prise de vue, d'une indication de retour de vignette au module de traitement d'image en réponse au second événement (S614) ; et
le renvoi, par le module de traitement d'image, de la première vignette à l'application d'appareil photo en réponse à l'indication de retour de vignette (S615), et
dans lequel après l'envoi, par l'application d'appareil photo, d'un premier événement au module de traitement de requête, le procédé comprend en outre :
si une opération effectuée par l'utilisateur dans l'interface de prise de vue est une opération de prise de vue en continu ou une opération de glissement, l'envoi, par l'application d'appareil photo, d'une instruction d'annulation au module de traitement de requête (S601A), dans lequel l'instruction d'annulation indique d'annuler la génération de la vignette, et l'opération de prise de vue en continu ainsi que l'opération de glissement comprennent chacune : une opération dans laquelle l'utilisateur presse la commande de prise de vue ;
l'envoi, par le module de traitement de requête, d'une requête d'annulation de vignette au moteur de prise de décision (S602A) ;
lorsque le moteur de prise de décision envoie les informations de séquence de trames au module de sélection de trame, l'envoi, par le moteur de prise de décision, d'une requête d'arrêt de sélection de trame au module de sélection de trame (S603A) ;
lorsque le module de sélection de trame envoie la trame cible au module de traitement de vignette, l'envoi, par le module de sélection de trame, d'une requête d'arrêt de traitement au module de traitement de vignette (S604A) ;
lorsque le module de traitement de vignette envoie la première vignette au module de traitement d'image, l'envoi, par le module de traitement de vignette, d'une requête d'arrêt au module de traitement d'image (S605A) ; et
lorsque le module de traitement d'image reçoit l'indication de retour de vignette en provenance du module de prise de décision de prise de vue, l'omission du renvoi, par le module de traitement d'image, de la première vignette à l'application d'appareil photo (S606A),
dans lequel la trame cible est une photo ayant la clarté la plus élevée dans la séquence de trames photo.

2. Procédé selon la revendication 1, dans lequel la sélection, par le module de sélection de trame, d'une trame cible à partir de la séquence de trames photo comprend :
la sélection, par le module de sélection de trame, de la trame cible à partir de la séquence de trames photo sur la base d'un paramètre de prise de vue de chaque photo dans la séquence de trames photo.

3. Procédé selon l'une quelconque des revendications 1 ou 2, dans lequel le terminal comprend en outre : une application de galerie, et après le renvoi, par le module de traitement d'image, de la première vignette à l'application d'appareil photo, le procédé comprend en outre :
l'envoi, par l'application d'appareil photo, de la première vignette à l'application de galerie ; et
le stockage, par l'application de galerie, de la première vignette ; et
après que le module de traitement d'image reçoit la première vignette provenant du module de traitement de vignette, le procédé comprend en outre :
l'obtention, par le module de traitement d'image, de la séquence de trames photo à partir du module de sélection de trame (S617) ;
la génération, par le module de traitement d'image, d'une seconde vignette sur la base de la séquence de trames photo (S618) ;
l'envoi, par le module de traitement d'image, de la seconde vignette à l'application de galerie (S619) ; et
le remplacement, par l'application de galerie, de la première vignette par la seconde vignette (S620).

4. Procédé selon la revendication 3, dans lequel après le remplacement, par l'application de galerie, de la première vignette par la seconde vignette, le procédé comprend en outre :
lorsque le terminal affiche l'interface de prise de vue, l'obtention, par l'application d'appareil photo, de la seconde vignette à partir de l'application de galerie ; et
la commande, par l'application d'appareil photo, du terminal pour afficher la seconde vignette dans la zone d'affichage de vignette.

5. Procédé selon l'une quelconque des revendications 1 à 4, dans lequel le terminal comprend en outre : une interface de traitement d'événement, et l'envoi, par l'application d'appareil photo, d'un premier événement au module de traitement de requête comprend :
l'envoi, par l'application d'appareil photo, du premier événement au module de traitement de requête via l'interface de traitement d'événement.

6. Dispositif électronique (1100), comprenant : un processeur (1101), une mémoire (1102), un objectif d'appareil photo, un écran et un écran tactile, dans lequel
la mémoire (1102) stocke des instructions informatiques ; et
le processeur (1101) exécute les instructions informatiques stockées dans la mémoire (1102), pour permettre au processeur (1101) de mettre en œuvre le procédé selon l'une quelconque des revendications 1 à 5.

7. Support de stockage lisible par ordinateur, dans lequel le support de stockage lisible par ordinateur stocke des programmes ou instructions informatiques, et lorsque les programmes ou instructions informatiques sont exécutés sur un dispositif électronique selon la revendication 6, le procédé selon l'une quelconque des revendications 1 à 5 est mis en œuvre.
